# EUROPEAN PATENT SPECIFICATION

(11) **EP 1 504 817 B1**
(45) Date of publication and mention of the grant of the patent: **27.06.2007**
(21) Application number: 03728053.4
(22) Date of filing: 12.05.2003
(51) Int. Cl.: B01J 35/04, B01D 53/86, F01N 3/28

(54) **METAL CARRIER FOR EXHAUST EMISSION CONTROL**
METALLTRÄGER FÜR ABGASREINIGUNG
SUPPORT METALLIQUE POUR LA REDUCTION DES EMISSIONS DE GAZ POLLUANTS

(30) Priority: 13.05.2002 JP 2002137612
(43) Date of publication of application: 09.02.2005
(73) Proprietor: NIPPON YAKIN KOGYO CO., LTD., Chuo-ku Tokyo 104-8365 (JP)
(72) Inventor: KURODA,Yasuhide Prod.Deve.Cen.of Nippon Yakin Kogyo CoLtd, Kawasaki-shi, Kanagawa 210-8558 (JP); AOKI,Yukio Prod.Deve.Cen. of Nippon Yakin Kogyo Co.Ltd, Kawasaki-shi, Kanagawa 210-8558 (JP)
(74) Representative: Banzer, Hans-Jörg
(86) International application number: PCT/JP2003/005896
(87) International publication number: WO 2003/095091

(56) References cited:
- EP-A- 0 786 585
- EP-A1- 0 351 841
- EP-A1- 0 658 390
- US-A- 5 403 558

## Description

### Field of the Invention

The present invention relates to a metal carrier for exhaust gas cleaning which carry catalyst to clean the exhaust gases from automobile.

### Description of the Prior Art

A metal honeycomb carrier for carrying a catalyst which cleans exhaust gases from an automobile is characterized to be prepared by piling a flat plate and corrugated plate both of them are made of heat-resisting metal (stainless steel), winding up them and inserting said wound body into a cylindrical metal casing so as to form a metal honeycomb core body (hereinafter shortened to a core body). The outermost circumference of said core and the inner surface of said cylindrical metal casing are joined together with. When these metal carrier are used for an automobile exhaust gas cleaning apparatus, they are affected by cooling/heating cycle and large temperature gradient is generated between the center part and the outermost part of the carrier. Therefore, not only thermal stress acts upon the carrier, but also deforming of a cell or breaking of a foil composing the cell or breaking of the joint part between the core body and the cylindrical metal casing are caused by mechanical vibration of an engine and by exhaust back pressure caused by exhaust gas flow.

That is, when the metal carrier is heated and cooled down, large temperature gradient is caused between outermost part and center part of the carrier. By the reaction of the exhaust gas with the catalyst, the center part of the core body is heated, and when the temperature of the center part is becomes higher than that of outer part, the center part becomes to have a tendency to stretch from the outer part effected by thermal expansion. And by being cooled down from the outermost part, the center part stretched by thermal expansion can not contract sufficiently and deforms permanently to axial direction, if there is a restriction at the surroundings such as a jointing part. By repeating said thermal cycles of heating and cooling, the center part of core body tends to extend to the axial direction gradually.

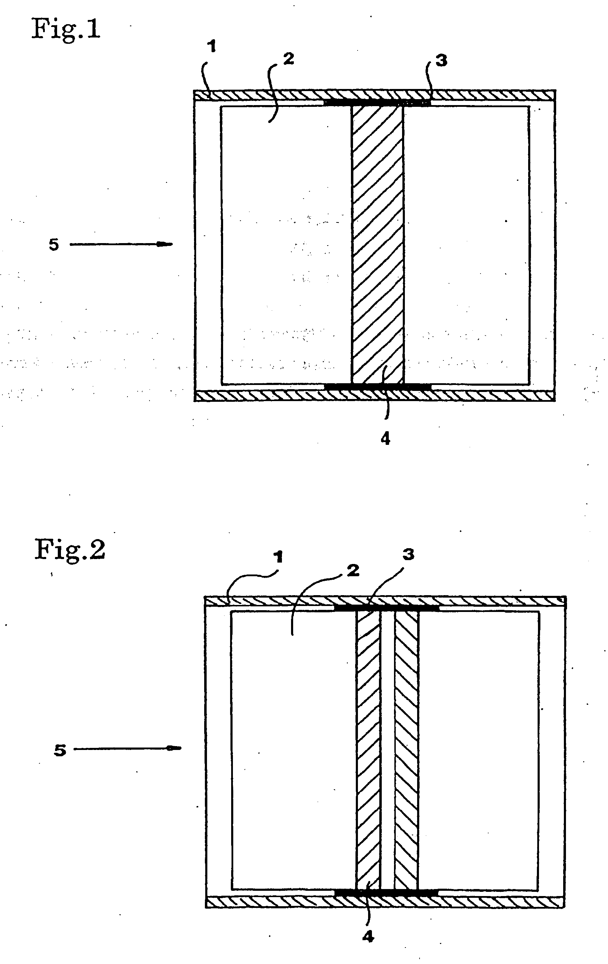

In the cases of a metal carrier having a structure to fix the both ends of a core body by joining, which are disclosed, for example, in Figs.8a, 8b of Japanese Patent Laid Open Publication 56-4373 or in Figs. 1,3,4,5 and 6 of Japanese Patent 5-45298, when the above mentioned extending phenomenon to the axial direction of the core foil is caused, a flat foil and a corrugated plate composing the core body cause buckling and metal carrier breaks. To avoid said problem, it is desirable to restrict the joining region of the core body to the axial direction.

For example, in Japanese Patent Laid Open Publication 4-29750, a metal carrier which is prepared by joining a core body part and a metal cylinder to the metal carrier axial direction using plural bands formed with the distance of 1-15mm ring shape intervals. In said metal carrier, the stress toward the metal carrier axial direction generated at the cooling and heating cycle is absorbed by deformation of non joining part locating at the ring shape interval position, and the stress is dispersed to the joining part and to the non-joining part.

However, even if the metal cylinder and the core body is joined by plural zones, there is a case that the stress is not dispersed effectively. This is caused by the jointed cognition of the core body. For example, in the case when the joining boundary of a core body part and a cylindrical metal casing are coincided with the joining boundary inside of core body, the stress by heat cycle is concentrated to said part, and breaking of foil generates from said part.

For the purpose to solve the problems of buckling in a core body and breaking causes at the joining part of the core body with the cylindrical casing, the art mentioned below is disclosed in Japanese Patent Laid Open Publication 4-148016. Namely, in said publication, the joining length of the core body to the axial direction is restricted from 5% to 20% to the full length, a flat plate and a corrugated plate are joined at only one position, reinforced area is provided at the outer layer part, and the cylindrical casing and the core body are jointed in the range of axial direction in said outer layer reinforced area.

That is, in the structure of the joining part of the core body and the cylindrical casing, it is disclosed that the joining length to the axial direction in the core body is longer than the joining length of outermost periphery o the core body with the cylindrical casing. However, by said joining method, in the case when the outermost periphery of the core body is a flat plate, to the joining end of the flat plate locating at outmost circumference with he cylindrical casing, which support full load loaded to the core body by vibration, the stress is concentrated and durability of a metal carrier is spoiled.

Further, the applicant of the present invention has already obtained a patent (Japan Patent No.3259081) referring to the following technique. That is, a catalyst carrier for cleaning exhaust gas wherein the carrier is in the form of a core body formed by winding a flat plate and a corrugated plate and cylindrical metal casing surrounding said core body comprising, joining part of a flat plate and a corrugated plate at voluntary place and voluntary width at axial direction being not to overlap with the joining part of the outermost periphery of the core body with the inner surface of the cylindrical metal casing. The metal carrier of said invention characterizable by having a joining structure mainly to absorb the thermal distortion caused by temperature change which avoid the overlap of a joining part of the core body with the cylindrical metal casing and a joining part of a flat and a corrugated plate is effective in the case when relatively large temperature gradient is caused especially between the cylindrical metal casing and the outermost periphery of the core body. However, according to the more detailed investigation, the inventors of the present invention have obtained following knowledge. That is, since the joining part of a flat plate or a corrugated place with a cylindrical metal casing is jointed by metallic joining the joining part has good thermal conduction and the stress by thermal distortion is very small, however, the joining part of the core body with the cylindrical metal casing should support whole loaded to the core body from outside, for example, by vibration, it is very important to improve the above mentioned problem.

US 5,403,558 discloses a metallic carrier in which flat and corrugated foils of the carrier are joined together in a range from the outermost to the innermost layer in at least one axial end portion of the honeycomb, the joining between the corrugated or flat foil with the metallic jacket being made in the intermediate portion.

The inventors of the present invention have continued an investigation based on above mentioned knowledge, and accomplished the present invention. The object of present invention is to provide a metal carrier for cleaning exhaust gas wherein the carrier is in the form of joining a core body formed by winding a flat plate and a corrugated plate with a cylindrical metal casing surrounding said core body, especially, joining a core body whose outermost periphery is a flat plate with a cylindrical metal casing, which has excellent durability not to break even if it suffers severe thermal cycles of heating and cooling or hard mechanical vibration.

### SUMMARY OF THE INVENTION

The important point of the present invention can be illustrated as follows. That is, the present invention is a metal carrier for cleaning exhaust gas wherein the carrier is in the form of joining a core body formed by winding a flat steel plate and a corrugated steel plate with a cylindrical metal casing surrounding said core body, wherein the outermost periphery of the core body is joined with the inner surface of the cylindrical metal casing by voluntary width to the axial direction, covering whole circumference direction and at the voluntary position, further, the joining zone of the outermost flat plate with the corrugated plate which forms a second layer or the joining zone of the outermost corrugated plate with the flat plate which forms a second layer is formed within the inside of the width to the axial direction of the joining zone with the cylindrical metal casing.

### BRIEF ILLUSTRATION OF THE DRAWINGS

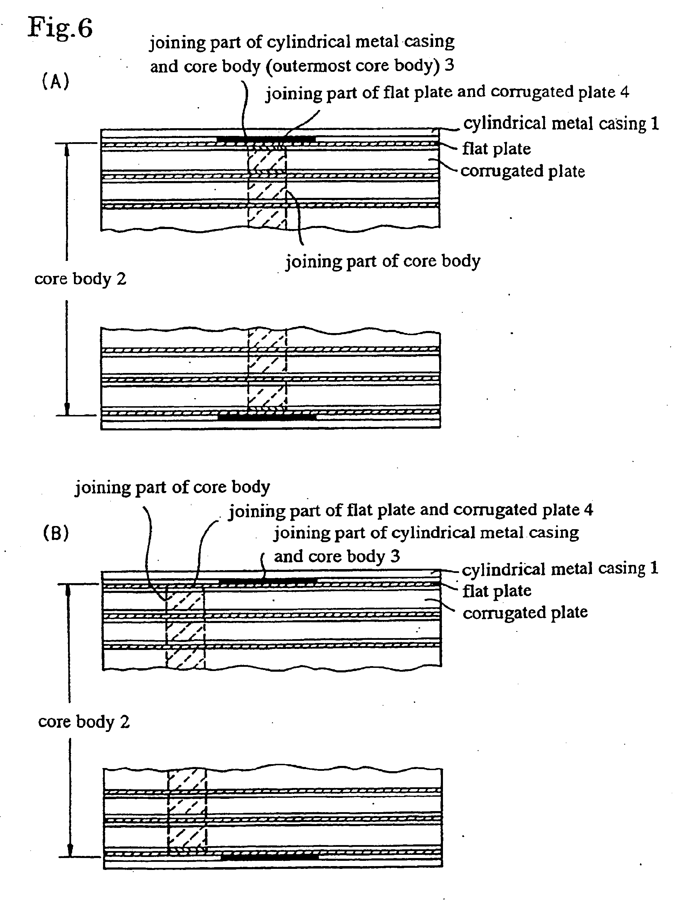

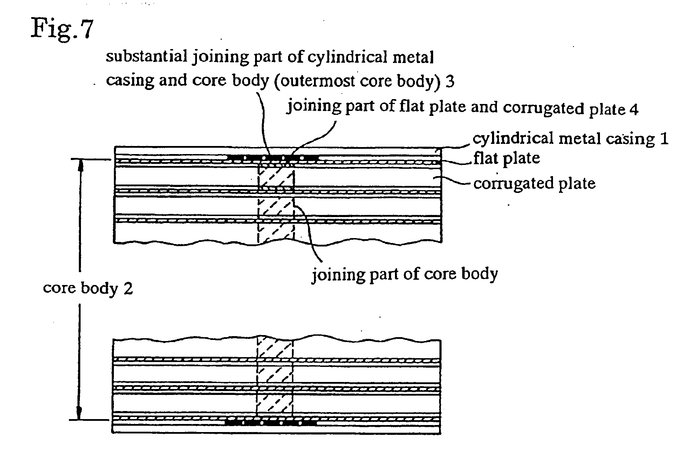

Fig.1 is the schematic illustration of the metal carrier of Example 1
Fig.2 is the schematic illustration of the metal carrier of Example 2
Fig.3 is the schematic illustration of the metal carrier of Comparative Example 1
Fig.4 is the schematic illustration of the metal carrier of Comparative Example 2
Fig. 5 is the schematic illustration showing one example of the distribution of the temperature in the metal carrier
Fig. 6 is the schematic illustration showing relationship of the joining zone of the core body with the cylindrical metal casing and the stress exerts to the outermost flat plate of the core body,
   (A) is the case when the joining zone of the core body is locating within the inside of the joining zone of the cylindrical metal casing with the core body (outermost flat plate)
   (B) is the case when the joining zone of the core body is locating from the joining zone with the cylindrical metal casing
Fig.7 is the drawing showing the case of Fig.6 (A), wherein the joining zone includes an incontinuous condition which is actually regarded as a continuous zone

In the drawings, each marks are as follows.
1. Cylindrical metal casing
2. Core body
3. Joining part of the cylindrical metal casing and the core body
4. Joining part of the flat plate and the corrugated plate of the core body
5. Direction of exhaust gas introduction

### DETAILED DESCRIPTION OF THE INVENTION

The present invention will be illustrated more in detail according to the following description.

In the metal carrier for cleaning exhaust gas with the structure combining a core body and a cylindrical casing, the acceleration (G) added to the metal carrier, such as by vibration or others, is supported by the joining zone of a flat and a corrugated plate, and full loads of core body is supported by the joining zone of the core body with the cylindrical casing. When the joining zone of the outermost flat plate with the corrugated plate is located within the inside of joining zone of the core body with the cylindrical casing the stress concentration does not occur to the ends of both joining zones, however, if the joining zone of the outermost flat plate with the corrugated plate is shifted to the outside of the joining zone of the core body with the cylindrical casing, the stress concentration occurs to the shifted end of the joining zone of the core body with the cylindrical casing.

This point is illustrated more in detail. Since the flat plate locating at the outermost periphery of the core body is supporting whole loads added from outside e.g. vibration to the core body at the joining zone with the cylindrical casing, there is no problem against the external forth of axial direction from the intensive view point if the joining zone has a certain length. In the meanwhile, if the structure is not suited, against the external forth of perpendicular direction to axis, stress concentrates to the end part of the joining zone of the outermost periphery with the cylindrical casing. Therefore, it is desirable to consider the joining structure not to accompany such a stress concentration. That is, as shown in Fig.6 (A), by providing a joining zone of the flat plate of the core body with the corrugated plate within the inside of the joining zone of the cylindrical casing with the outermost flat plate of the core body to the axial direction, almost whole loads added from outside are distributed to the inside of the joining zone of the outermost periphery with the cylindrical casing of the outermost periphery with the cylindrical casing. Therefore, the stress does not concentrate to the end part of the joining part of the flat plate with the corrugated plate, and only the stress accompanied with the vibration of the outermost flat plate is concentrated. However, for example, as shown in Fig.6 (B), if the joining zone of a core body is prepared by shifting to the outside of the joining zone of the cylindrical casing with the outermost flat plate of the core body to the axial direction, almost all loaded to the core body are supported by the joining zone of the core body. Therefore, to the shifted side of end part of the joining zone of the core body with the cylindrical casing, the stress is concentrated and a crack is generated on the outermost flat plate, and the life of the metal carrier is shortened.

The degree of above mentioned stress concentration is depending on the structural feature of the core body, and when only a part of joining zone of the flat plate locating at outermost periphery of the core body with the corrugated plate is shifted to the outside of the joining zone of the core body with the cylindrical casing, the phenomenon of stress concentration is generated. This stress concentration is generated also in the case when the outermost periphery is consisted of a corrugated plate. And, it is necessary to avoid the stress concentration in both cases.

Therefore, in the present invention, the joining zone of the flat plate locating at outermost periphery of the core body with the corrugated plate is prepared so as to be within the inside of the joining zone of the inner surface of the cylindrical casing with the outermost periphery of the core body.

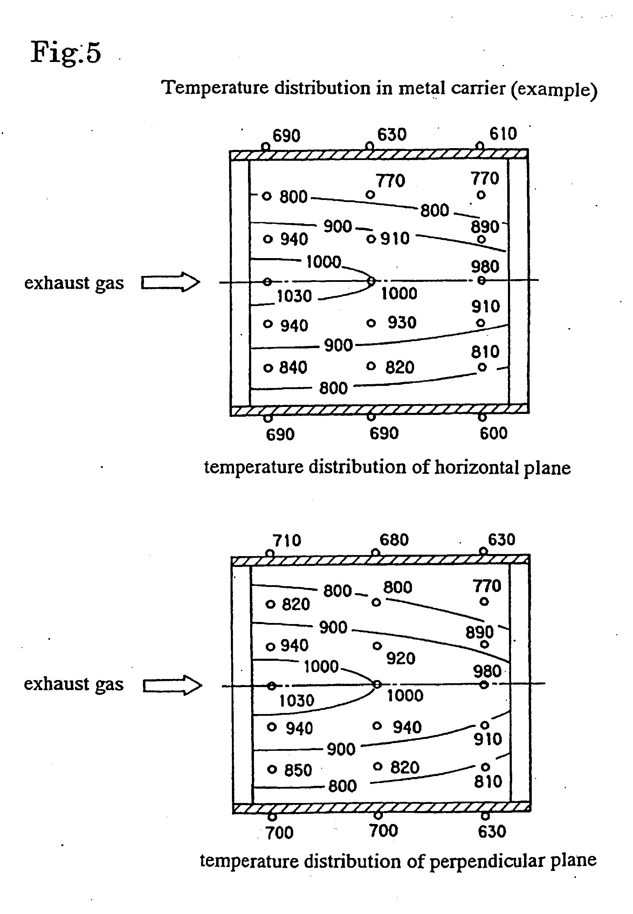

At the actual use, the center part of a metallic honeycomb carrier is heated over than 1000°C ,while the temperature of the outermost circumference of it is approximately 600°C, namely, large temperature gradient is caused toward from the center to the outermost circumference. One example is shown in Fig.5. Additionally, the fluctuation of temperature is accompanied according to the using condition, the large thermal distortion generated at the center part of the core body.

In the meanwhile, the temperature of a joining zone of a flat plate locating at the outermost periphery of a core body with a cylindrical casing is lower than that of a center part of the core body. By a joining method which can be used in the present invention, for example, metal brazing, diffusion joining, resistance welding, laser welding or electron beam welding, the metal of cylindrical casing and the flat plate of outermost periphery of the core body is metallically joined, therefore, the joining zone indicates good thermal conduction and indicates approximately same temperature. Therefore, the stress by thermal distortion at the joining part of the flat plate locating at the outermost periphery of the core body with the cylindrical metal casing is very small compared with that of center part of the core body. However, since the flat plate locating at the outermost periphery of the core body is supporting whole loads added to the core body from the outside e.g. vibration at the joining part with the cylindrical casing, the stress is concentrated at the joining end of the axial direction. To avoid said stress concentration, as mentioned above, it is necessary to prepare the joining part of a flat plate of a core body with a corrugated plate within the inside of the joining part of said cylindrical casing and the flat plate of the core body of the axial direction. If a joining part of the core body is prepared by shifting to outside, the whole loads to be loaded to the core body must be supported by the joining part, and stress is concentrated to the end of joining part of the shifted side of the axial direction. Therefore, crack is generated at the flat plate locating at the outermost of the core body and spoil the life of the metal carrier.

The materials to be used as a flat plate or a corrugated plate in the present invention is not different from the materials used in a conventional core body, and is a stainless steel plate of 30-100µm thickness. These flat plate and corrugated plate are piled and wound up and form a core body having honeycomb cross sectional view. The outermost periphery of the wound up body can be a flat plate or a corrugated plate, however, desirably is the flat plate. In the case when the outermost periphery is a corrugated plate, it has a certain rigidity to the axial direction by its corrugated structure. In the case, when the outermost layer is a flat plate, since the rigidity is only depending on curvature of the outermost circumference, strain to the bending stress to axial direction becomes large. Therefore, it is desirable to join the flat plate location at the outermost periphery with a cylindrical metal casing. In the present invention, the method such as metal brazing, diffusion joining, resistance welding, laser welding or electron beam welding can be used as the joining method. The joining zone to axial direction can be prepared at the voluntary place by the voluntary width, and it is desirable to prepare 1-8 zones by 1-20 mm width. Further, referring to the circumference direction of the joining zone, joining is carried out continuously or intermittently so as to cover whole circumference, it is desirable that the joining part of the flat plate with the corrugated plate are not overlapped at the both sides of the flat plate. If said overlapping is avoided, and joining part is separated at the both sides of the flat plate, the flat plate can absorb the thermal distortion at said part. And in the case when a flat plate is joining by metal brazing, since the concentration of brazing component (for example, Ni or others) is occurred at the joining part and the foil of the core body is degraded at the joining part, said overlapping is not desirable. Further, as shown in Fig.7, in the present invention, the joining zone includes an incontinuous condition which is actually regarded as a continuous zone.

The cross section of the core body is not restricted, for example, a circular shape, an oval shape or a race truck shape can be used.

As a cylindrical metal casing, the stainless steel of 1-15 mm thickness is used, and the inner diameter of the casing is same to the outer diameter of the core body, and the core body is pressed into the cylindrical metal casing. Therefore, the cross sectional view of the cylindrical metal casing is same to that of the core body to be pressed in.

At the joining process of a core body with a cylindrical metal casing, it is desirable that a joining zone of a flat plate and a corrugated plate of the core body from the innermost circumference to the outermost circumference is formed within the inside of the width to the axial direction of the joining zone of the cylindrical metal casing with the core body. The reason why can be explained as follows. That is, the most important point is the joining condition of the outermost periphery with the cylindrical casing, and because the temperature of inner side of the core body becomes higher, the width of the joining part is preferably to be short. It is not necessary to be unnecessarily wider or narrower or alterable. In other words, it is desirable that a joining zone of the flat plate of the core body with the corrugated plate is located within the limit of both ends of the joining zone of the cylindrical metal casing with the core body. And, when the width of the joining zone of the cylindrical metal casing with the core body is 1/2 length or smaller than 1/2 length of the core body to the axial direction from the outlet of the exhaust gas, the desirable results can be expected from the experience view point. This can be explained because the temperature of the outlet side is lower than that of the inlet side, the using condition becomes mild at the outlet side.

It is desirable that a joining zone of a cylindrical metal casing with a core body is prepared in plural to the axial direction because the thermal distortion is dispersed, it is desirable that the joining zone of a flat plate and a corrugated plate in the core body and the both ends of the joining zone of the cylindrical metal casing and the core body is prepared in inside by 10 times or more than 10 times to the thickness of metal foil which composes the core body. The concentration of stress to the end part of the joining zone becomes smaller when the joining zone in the core body is prepared within the limit of inside of the joining ends of the cylindrical metal casing with the core body by certain distance. Therefore, if the thickness of a foil is 100µm, it is desirable that the joining zone of the cylindrical metal casing with the core body is prepared in inside more than 100µm*10=1.0mm. Further, it is desirable that the joining zone of a flat plate and a corrugated plate of the core body and the joining zone of the core body with the cylindrical metal casing have an un-joining part of 5% length or longer than 5% length to the length of the core body to the axial direction at lest at one end.

### EXAMPLES

The present invention will be illustrated more substantially referring to the drawings as the Examples. However, these Examples are not intending to restrict the scope of the claims of the present invention.

### Example 1

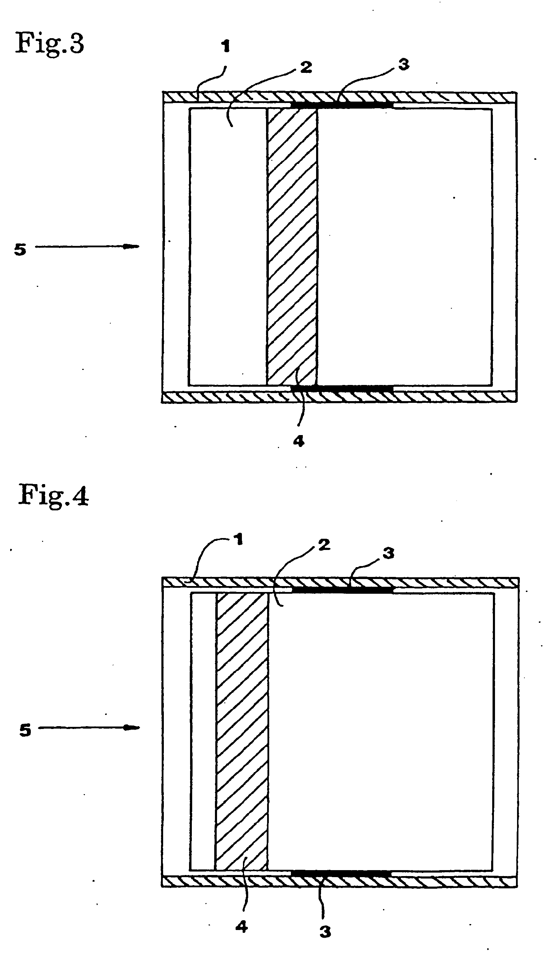

Fig.1 is a metal carrier of the present invention. A corrugated plate is prepared by turning over a ferrite type heat resistance stainless steel flat plate of 60mm width and µ m thickness. To the both surfaces of said corrugated plate, slurry composed of a mixture of powder type solder material and a binder are coated by 10mm width at the center position of the width direction, piled with a flat plate and wound up, thus a core body 2 is prepared. Then, the slurry composed of a mixture of powder type solder material and a binder is coated to the center position by 20mm width to the length direction o the inner surface of a cylindrical metal casing 1 of 70mm length and 1.5mm thickness. After dried up, the core body 2 is pressed into said cylindrical metal casing at the center position to the axial direction. Then the heat treatment for brazing (1200°C, 20min., 10⁻⁵ Torr) is carried out and a metal carrier of 63.5mm diameter and 70mm length (length of the core body is 60mm) is prepared. The outline of he metal carrier by this process is shown in Fig.1. In Fig.1, 3 shows the joining zone of the cylindrical metal casing 1 with the core body 2,4 shows the joining zone of a flat plate and a corrugated plate of the core body and 5 shows the direction of exhaust gas introduction.

Catalyst is carried on this metal carrier, and spalling test (thermal cycle: heating x 12minutes →compulsory cooling by air x 3minutes, Max. 1000°C, vibration: 200Hz, acceleration: 30G) is carried out. After the test of 200 thermal cycles, acceleration of 30G, 3.6x10⁸times, an aberration of core body or a breaking of brazing part are not observed.

### Example 2

Fig.2 is also metal carrier of the present invention. A corrugated plate is prepared by turning over a ferrite type heat resistance stainless steel carrier of the present invention. A corrugated plate is prepared by turning over a ferrite type heat resistance stainless steel flat plate of 60mm width and 100 µ m thickness. To the front surface of said corrugated plate, slurry composed of a mixture of powder type solder material and a binder are coated at 24-29mm zone from the end an exhaust gas inlet by 5mm width, piled with a fiat plate and wound up, thus a core body 2 is prepared. Then, the slurry composed of a mixture of powder type solder material and a binder is coated at the center position by 20mm width to the length direction of the inner surface of a cylindrical metal casing 1 of 70mm length and 1.5mm thickness. After dried up, the core body 2 is pressed into said cylindrical metal casing at the center position t the axial direction. Then the heat treatment for brazing (1200°C,20mm., 10⁻⁵ Torr)is carried out and a metal carrier of 63.5mm diameter, 70mm length(length of the honeycomb core body is 60mm) is prepared. The outline of the metal carrier by this process is shown is Fig.2, 3 shows the joining zone of the cylindrical metal casing 1 with the core body 2,4 shows the joining zone of a flat plate and a corrugated plate of the core body and 5 shows the direction of exhaust gas introduction.

Catalyst is on this metal carrier, and spalling test (thermal cycle: heating x 12minutes → compulsory cooling by air x 3minutes,Max. 1000°C, vibration: 200Hz, acceleration: 30G) is carried out. After the test of 200 thermal cycles, acceleration of 30G, 3.6x10 ⁸ times, an aberration of core body or a breaking of brazing part are not observed.

### Comparative Example 1

A corrugated plate is prepared by turning over a ferrite type heat resistance stainless steel flat plate of 60mm width and 100 µm thickness. To the both surfaces of said corrugated plate, slurry composed of a mixture of powder type solder material and a binder is 15-25mm zone from the end of an exhaust gas inlet by 10mm width, piled with a flat plate and wound up, thus a core body 2 is prepared. Then, the slurry composed of a mixture of powder type solder material and a binder is coated at the center position by 20mm width to the length direction of the inner surface of a cylindrical metal casing 1 of 70mm length and 1.5mm thickness. After dried up, the core body 2 is pressed into said cylindrical meal casing at the center position to the axial direction. Then the heat treatment for brazing (1200°C, 20min., 10⁻⁵ Torr) is carried out and a metal carrier of 63.5mm diameter, 70mm length (length of the honeycomb core body is 60mm) is prepared. The outline of the metal carrier by this process is shown in Fig.3. In Fig.3, 3 shows the joining zone of the cylindrical metal casing 1 with the core body 2,4 shows the joining zone of a flat plate and a corrugated plate of the core body and 5 shows the direction of exhaust gas introduction.

Catalyst is carried on this metal carrier, and spalling test (thermal cycle: heating x 12minutes → compulsory cooling by air x 3minutes, Max.1000°C, vibration: 200Hz, acceleration: 30G) is carried out. After the test of 200 thermal cycles, acceleration of 30G, 3.6x10⁸ times, an aberration of core body is not observed, however, a crack is observed at the end of inlet of exhaust gas of the brazing part of the outermost flat plate with the cylindrical metal casing.

### Comparative Example 2

A corrugated plate is prepared by turning over a ferrite type heat resistance stainless steel flat plate of 60mm width and 100µm thickness. To the both surfaces of said corrugated plate, slurry composed of a mixture of powder type solder material and a binder is coated at 5-15mm zone from the end of an exhaust gas inlet by 10mm width, piled with a flat plate and wound up, thus a core body 2 is prepared. Then, the slurry composed of a mixture of powder type solder material and a binder is coated to the center position by 20mm width to the length direction of the inner surface of a cylindrical metal casing 1 of 70mm length and 1.5mm thickness. After dried up, the core body 2 is pressed into said cylindrical metal casing at the center position to the axial direction. Then the heat treatment for brazing (1200°C, 20min., 10⁻⁵ Torr) is carried out and a metal carrier of 63.5mm diameter, 70mm length (length of the honeycomb core body is 60mm) is prepared. The outline of the metal carrier by this process is shown in Fig.4. In Fig.4, 3 shows the joining zone of the cylindrical metal casing 1 with the core body 2, 4 shows the joining zone of a flat plate and a corrugated plate of the core body and 5 shows the direction of exhaust gas introduction.

Catalyst is carried on this metal carrier, and spalling test (thermal cycle: heating x12minutes → compulsory cooling by air x 3minutes, Max. 1000°C, vibration: 200Hz, acceleration: 30G) is carried out. After the test of 52 thermal cycles, acceleration of 30G, 9.4x10⁶ times, a crack generates at the end of inlet of exhaust gas of the brazing part of the outermost flat plate with the cylindrical metal casing and the core body is dropped out from the casing.

### The Effect of the Invention

As mentioned above, by using the core body joining structure of the present invention, the metal carrier for exhaust gases cleaning for an automobile, a motor cycle or an industrial machine which has excellent durability can be accomplished.

## Claims

1. A metal carrier for cleaning exhaust gas wherein the carrier is in the form of joining a metal honeycomb core body (2) formed by winding a flat steel plate and a corrugated steel plate with a cylindrical metal casing (1) surrounding said metal hon-eycomb core body (2), wherein the outermost periphery of the metal honeycomb core body (2) is joined with the inner surface of the cylindrical metal casing (1) along a predetermined width in the axial direction, covering the whole circumference direction and, at said position of the connection, further, the joining zone (4) of the outermost flat plate of the metal honeycomb core body (2) with the corrugated plate which forms a second layer or the joining zone (4) of the outermost corrugated plate with the flat plate which forms a second layer is formed within said predetermined width in the axial direction of both ends of the joining zone (3) with the cylindrical metal casing **characterized in that** the joining zone (4) of the flat plate and the corrugated plate of the metal honeycomb core body (2) is formed from the outermost circumference to the innermost circumference.

2. The metal carrier for cleaning exhaust gas according to claim 1, wherein the outermost periphery of the metal honeycomb core body (2) is a flat plate.

3. The metal carrier for cleaning exhaust gas according to claim 1 or 2, wherein the width of the joining zone (3) of the cylindrical metal casing (1) within the metal honeycomb core body (2) is 1/2 length or smaller than 1/2 length of the metal honey-comb core body (2) to the axial direction from the outlet of the exhaust gas.

4. The metal carrier for cleaning exhaust gas according to any one of claims 1 to 3, wherein the joining zone (4) of the flat plate with the corrugated plate in the metal honeycomb core body (2) are not overlapped at both sides of the flat plate.

5. The metal carrier for cleaning exhaust gas according to any one of claims 1 to 4, wherein the joining zone (3) of the cylindrical metal casing (1) with the metal honey-comb core body (2) or the joining zone (4) of the flat plate and the corrugated plate are prepared in plural to the axial direction.

6. The metal carrier for cleaning exhaust gas according to any one of claims 1 to 5, wherein the joining zone (4) of the flat plate and the corrugated plate in the metal honeycomb core body (2) and the both ends of the joining zone (3) of the cylindrical metal casing (1) and the metal honeycomb core body (2) is prepared inside by 10 times or more than 10 times to the thickness of metal foil which composes the metal honeycomb core body (2).

7. The metal carrier for cleaning exhaust gas according to any one of claims 1 to 6, wherein the joining zone (4) of the flat plate with the corrugated plate of the metal honeycomb core body (2) and the joining zone (3) of the core body (2) with the cylindrical metal casing (1) have an un-joining part of 5%length to the length of the core body to the axial direction at the least at one end.

8. The metal carrier for cleaning exhaust gas according to any one of claims 1 to 7, wherein the total of length of the joining zone (3) of the cylindrical metal casing (1) with the metal honeycomb core body (2) to the axial direction of the core body (2) is 5mm or longer than 5mm and 1/2 length or shorter than 1/2 length of the length of joining zone (3) of the cylindrical metal casing (1) with the metal honeycomb core body (2) to the axial direction of the core body.

## Patentansprüche

1. Ein Metallträger zum Reinigen von Abgas, wobei der Träger eine Form aufweist, die durch Verbinden eines Metallwabenkernkörpers (2), der durch Aufwickeln einer flachen Stahlplatte und einer welligen Stahlplatte gebildet wird, mit einem zylindrischen Metallgehäuse (1) gebildet wird, das den Metallwabenkernkörper (2) umschließt, wobei der äußerste Rand des Metallwabenkernkörpers (2) mit der inneren Oberfläche des zylindrischen Metallgehäuses (1) entlang einer vorbestimmten Breite in axialer Richtung verbunden ist, wobei die gesamte Umfangsrichtung abgedeckt wird, und wobei an der Stelle der Verbindung darüber hinaus der Verbindungsbereich (4) der äußersten flachen Platte des Metallwabenkernkörpers (2) mit der welligen Platte, die eine zweite Schicht bildet, oder der Verbindungsbereich (4) der äußersten welligen Platte mit der flachen Platte, die eine zweite Schicht bildet, innerhalb der vorbestimmten Breite in axialer Richtung von beiden Enden des Verbindungsbereichs (3) mit dem zylindrischen Metallgehäuse gebildet wird, **dadurch gekennzeichnet, dass** der Verbindungsbereich (4) der flachen Platte und der welligen Platte des Metallwabenkernkörpers (2) von dem äußersten Umfang zu dem innersten Umfang ausgebildet ist.

2. Der Metallträger zum Reinigen von Abgas nach Anspruch 1, wobei der äußerste Rand des Metallwabenkernkörpers (2) eine flache Platte ist.

3. Der Metallträger zum Reinigen von Abgas nach Anspruch 1 oder 2, wobei die Breite des Verbindungsbereichs (3) des zylindrischen Metallgehäuses (1) mit dem Metallwabenkernkörper (2) eine halbe Länge oder weniger als eine halbe Länge des Metallwabenkernkörpers (2) in axialer Richtung von dem Auslass des Abgases beträgt.

4. Der Metallträger zum Reinigen von Abgas nach einem der Ansprüche 1-3, wobei die Verbindungsbereiche (4) der flachen Platte mit der welligen Platte in dem Metallwabenkernkörper (2) sich an beiden Seiten der flachen Platte nicht überlappen.

5. Der Metallträger zum Reinigen von Abgas nach einem der Ansprüche 1-4, wobei der Verbindungsbereich (3) des zylindrischen Metallgehäuses (1) mit dem Metallwabenkernkörper (2) oder der Verbindungsbereich (4) der flachen Platte und der welligen Platte in axialer Richtung mehrfach ausgebildet sind.

6. Der Metallträger zum Reinigen von Abgas nach einem der Ansprüche 1-5, wobei der Verbindungsbereich (4) der flachen Platte und der welligen Platte in dem Metallwabenkernkörper (2) und beide Enden des Verbindungsbereichs (3) des zylindrischen Metallgehäuses (1) und des Metallwabenkernkörpers (2) innerhalb der zehnfachen oder mehr als der zehnfachen Dicke von Metallfolie ausgebildet ist, welche den Metallwabenkernkörper (2) bildet.

7. Der Metallträger zum Reinigen von Abgas nach einem der Ansprüche 1-6, wobei der Verbindungsbereich (4) der flachen Platte mit der welligen Platte des Metallwabenkernkörpers (2) und der Verbindungsbereich (3) des Kernkörpers (2) mit dem zylindrischen Metallgehäuse (1) einen nicht verbundenen Teil einer Länge von 5% der Länge des Kernkörpers in axialer Richtung an mindestens einem Ende aufweisen.

8. Der Metallträger zum Reinigen von Abgas nach einem der Ansprüche 1-7, wobei die gesamte Länge des Verbindungsbereichs (3) des zylindrischen Metallgehäuses (1) mit dem Metallwabenkernkörper (2) in axialer Richtung des Kernkörpers (2) 5mm oder länger als 5mm und eine halbe Länge oder kürzer als eine halbe Länge der Länge des Verbindungsbereichs (3) des zylindrischen Metallgehäuses (1) mit dem Metallwabenkernkörper (2) beträgt, in axialer Richtung des Kernkörpers.

## Revendications

1. Support métallique pour nettoyer des gaz d'échappement dans lequel le support se présente sous la forme d'un assemblage de corps d'âme en nid d'abeilles métallique (2), formé en enroulant une plaque en acier plate et une plaque en acier ondulée avec un boîtier métallique cylindrique (1) entourant ledit corps d'âme en nid d'abeilles métallique (2), dans lequel la périphérie située le plus à l'extérieur du corps d'âme en nid d'abeilles métallique (2) est assemblée avec la surface interne du boîtier métallique cylindrique (1) le long d'une largeur prédéterminée dans la direction axiale, recouvrant toute la direction circonférentielle et au niveau de ladite position du raccordement, en outre la zone d'assemblage (4) de la partie plate située le plus à l'extérieur du corps d'âme en nid d'abeilles métallique (2) avec la plaque ondulée qui forme une seconde couche ou la zone d'assemblage (4) de la plaque ondulée située le plus à l'extérieur avec la plaque plate qui forme une seconde couche est formée dans ladite largeur prédéterminée dans la direction axiale des deux extrémités de la zone d'assemblage (3) avec le boîtier métallique cylindrique, **caractérisé en ce que** la zone d'assemblage (4) de la plaque plate et de la plaque ondulée du corps d'âme en nid d'abeilles métallique (2) est formée de la circonférence située le plus à l'extérieur à la circonférence située le plus à l'intérieur.

2. Support métallique pour nettoyer les gaz d'échappement selon la revendication 1, dans lequel la périphérie située le plus à l'extérieur du corps d'âme en nid d'abeilles métallique (2) est une plaque plate.

3. Support métallique pour nettoyer les gaz d'échappement selon la revendication 1 ou 2, dans lequel la largeur de la zone d'assemblage (3) du boîtier métallique cylindrique (1) dans le corps d'âme en nid d'abeilles métallique (2) représente 1/2 de la longueur ou est inférieure à 1/2 de la longueur du corps d'âme en nid d'abeilles métallique (2) dans la direction axiale à partir de la sortie du gaz d'échappement.

4. Support métallique pour nettoyer les gaz d'échappement selon l'une quelconque des revendications 1 à 3, dans lequel la zone d'assemblage (4) de la plaque plate avec la plaque ondulée dans le corps d'âme en nid d'abeilles métallique (2) ne se chevauchent pas au niveau des deux côtés de la plaque plate.

5. Support métallique pour nettoyer les gaz d'échappement selon l'une quelconque des revendications 1 à 4, dans lequel la zone d'assemblage (3) du boîtier métallique cylindrique (1) avec le corps d'âme en nid d'abeilles métallique (2) ou la zone d'assemblage (4) de la plaque plate et de la plaque ondulée sont préparées plusieurs fois dans la direction axiale.

6. Support métallique pour nettoyer les gaz d'échappement selon l'une quelconque des revendications 1 à 5, dans lequel la zone d'assemblage (4) de la plaque plate et de la plaque ondulée dans le corps d'âme en nid d'abeilles métallique (2) et les deux extrémités de la zone d'assemblage (3) du boîtier métallique cylindrique (1) et du corps d'âme en nid d'abeilles métallique (2) est préparée à l'intérieur représentant 10 fois ou plus de 10 fois l'épaisseur de la feuille métallique qui compose le corps d'âme en nid d'abeilles métallique (2).

7. Support métallique pour nettoyer les gaz d'échappement selon l'une quelconque des revendications 1 à 6, dans lequel la zone d'assemblage (4) de la plaque plate avec la plaque ondulée du corps d'âme en nid d'abeilles métallique (2) et la zone d'assemblage (3) du corps d'âme (2) avec le boîtier métallique cylindrique (1) ont une partie non assemblée représentant 5 % de la longueur sur la longueur du corps d'âme dans la direction axiale au niveau de la au moins une extrémité.

8. Support métallique pour nettoyer les gaz d'échappement selon l'une quelconque des revendications 1 à 7, dans lequel le total de la longueur de la zone d'assemblage (3) du boîtier métallique cylindrique (1) avec le corps d'âme en nid d'abeilles métallique (2) dans la direction axiale du corps d'âme (2) est de 5 mm ou plus longue que 5 mm et 1/2 de la longueur ou plus courte que 1/2 de la longueur de la zone d'assemblage (3) du boîtier métallique cylindrique (1) avec le corps d'âme en nid d'abeilles métallique (2) dans la direction axiale du corps d'âme.
